# EUROPEAN PATENT APPLICATION

(11) **EP 4 497 709 A1**
(43) Date of publication of application: **29.01.2025**
(21) Application number: 23774884.3
(22) Date of filing: 20.03.2023
(51) Int. Cl.: B65G 1/137, B65G 1/00

(54) **INFORMATION PROCESSING DEVICE, INFORMATION PROCESSING METHOD, PROGRAM, SYSTEM, AND COMPUTER-READABLE STORAGE MEDIUM**

(30) Priority: 22.03.2022 JP 2022045174
(71) Applicant: Kabushiki Kaisha Toshiba, Tokyo 105-0023 (JP); TOSHIBA INFRASTRUCTURE SYSTEMS & SOLUTIONS CORPORATION, Saiwai-ku Kawasaki-shi Kanagawa 212-0013 (JP)
(72) Inventor: MATSUMURA, Atsushi, Kawasaki-shi, Kanagawa 212-0013 (JP); SHIBATA, Masamitsu, Kawasaki-shi, Kanagawa 212-0001 (JP); NAKAMATA, Hirokazu, Kawasaki-shi, Kanagawa 212-0001 (JP); SUGIYAMA, Masaaki, Kawasaki-shi, Kanagawa 212-0013 (JP); OTSURU, Yoshihide, Kawasaki-shi, Kanagawa 212-0013 (JP)
(74) Representative: Horn Kleimann Waitzhofer Schmid-Dreyer Patent- und Rechtsanwälte PartG mbB
(86) International application number: PCT/JP2023/010947
(87) International publication number: WO 2023/182289

(57) **Abstract**

An information processing apparatus, an information processing method, a program, and a system capable of effectively processing articles from a plurality of owners are provided. According to an embodiment, the information processing apparatus includes an interface and a processor. The interface is connected to at least one warehouse system corresponding to each owner and at least one automated transport system transporting a storage mechanism storing an article. The processor is configured to: receive, from the warehouse system through the interface, a storage order for storing an article or a retrieval order for retrieving an article; specify an owner of the storage order or the retrieval order; and cause the automated transport system to transport the storage mechanism to a station at which an article is picked or stored through the interface based on owner information as information of the specified owner and the storage order or the retrieval order.

## Description

### FIELD

Embodiments described herein relate generally to an information processing apparatus, an information processing method, a program, a system, and a computer-readable storage medium.

### BACKGROUND

A picking system that picks (or stores) articles in accordance with an order is provided. Such a picking system is provided with a plurality of AGV racks for storing articles. The picking system transports AGV racks to picking stations using AGVs and causes robots or staff members to pick articles from the AGV racks.

The picking system may store articles from a plurality of owners. Therefore, a picking system that effectively processes packages from a plurality of owners is desired.

### CITATION LIST

### PATENT LITERATURE

Patent Document 1: Japanese Patent No. 6961774

### SUMMARY

### TECHNICAL PROBLEM

To solve the above-described problem, an information processing apparatus, an information processing method, a program, a system, and a computer-readable storage medium capable of effectively processing articles from a plurality of owners are provided.

### SOLUTION TO PROBLEM

According to an embodiment, an information processing apparatus includes an interface and a processor. The interface is connected to at least one warehouse system corresponding to each owner and to at least one automated transport system transporting a storage mechanism storing an article. The processor is configured to: receive, from the warehouse system through the interface, a storage order for storing an article or a retrieval order for retrieving an article; specify an owner of the storage order or the retrieval order; and cause the automated transport system to transport the storage mechanism to a station at which an article is picked or stored through the interface based on owner information as information of the specified owner and the storage order or the retrieval order.

### BRIEF DESCRIPTION OF THE DRAWINGS

FIG. 1 is a diagram conceptually illustrating a configuration example of a picking system according to the first embodiment.
FIG. 2 is a block diagram illustrating a configuration example of the picking system according to the first embodiment.
FIG. 3 is a block diagram illustrating a configuration example of a WES according to the first embodiment.
FIG. 4 is a block diagram illustrating a configuration example of a rack transport system according to the first embodiment.
FIG. 5 is a diagram illustrating an operation example of the picking system according to the first embodiment.
FIG. 6 is a sequence diagram illustrating an operation example of the picking system according to the first embodiment.
FIG. 7 is a sequence diagram illustrating an operation example of the picking system according to the first embodiment.
FIG. 8 is a diagram conceptually illustrating a configuration example of a picking system according to the second embodiment.
FIG. 9 is a diagram illustrating an operation example of the picking system according to the second embodiment.
FIG. 10 is a diagram conceptually illustrating a configuration example of a picking system according to the third embodiment.
FIG. 11 is a diagram conceptually illustrating a configuration example of a picking system according to the fourth embodiment.
FIG. 12 is a diagram illustrating an operation example of the picking system according to the fourth embodiment.
FIG. 13 is a flowchart illustrating an operation example of a WES according to the fourth embodiment.
FIG. 14 is a flowchart illustrating an operation example of an AGV control device according to the fourth embodiment.
FIG. 15 is a diagram conceptually illustrating a configuration example of a picking system according to the fifth embodiment.
FIG. 16 is a diagram conceptually illustrating a configuration example of a picking system according to the sixth embodiment.
FIG. 17 is a diagram conceptually illustrating a configuration example of a picking system according to the seventh embodiment.
FIG. 18 is a block diagram illustrating a configuration example of the picking system according to the seventh embodiment.

### DETAILED DESCRIPTION

Hereinafter, embodiments will be described with reference to the drawings.

### (First Embodiment)

First, the first embodiment will be described.

A picking system according to the embodiment stores articles in AGV racks and picks articles from AGV racks in a physical distribution system or the like. The picking system uses automated guided vehicles (AGVs) to transport AGV racks to picking stations. The picking system stores articles in or picks articles from AGV racks at the picking stations. The picking system causes an operator or a robot to store articles in or pick articles from the AGV racks.

For example, the picking system is used in a physical distribution center, a warehouse, or the like.

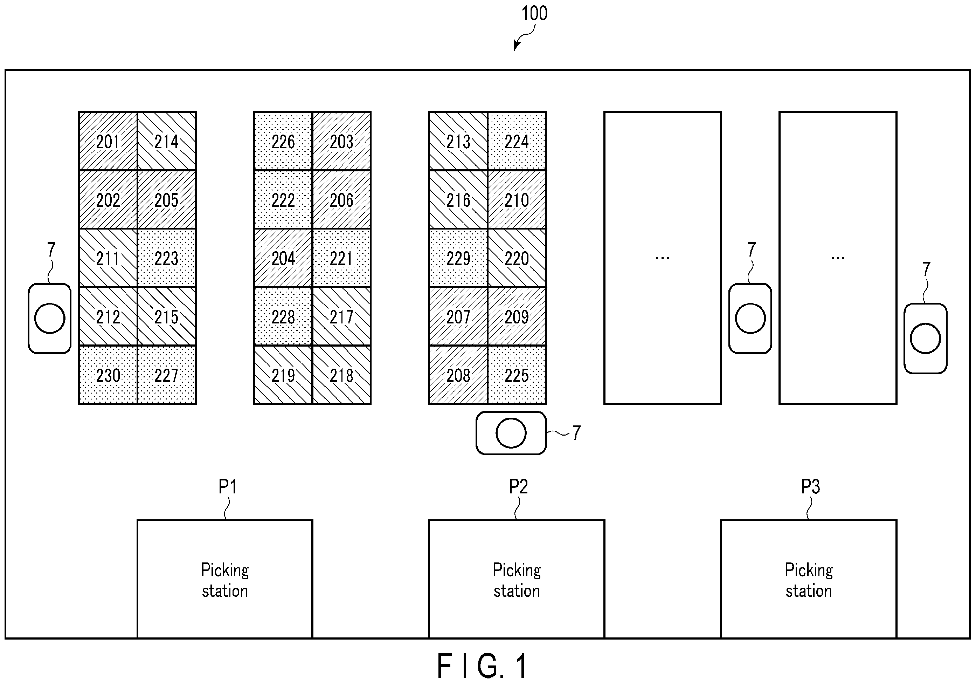

FIG. 1 is a diagram illustrating a configuration example of a picking system 100 according to the embodiment.

As shown in FIG. 1, the picking system 100 includes picking stations P (P1 to P3), rack transport AGVs 7, and AGV racks 201 to 230.

Each of the picking stations P1 to P3 is provided with a picking robot 81 and a takeout device 82, which will be described later. The takeout device 82 takes out cases for storing articles from compartments of the transported AGV racks 201 to 230. The picking robot 81 picks articles from the cases.

The picking system 100 can operate the picking robot 81 and the takeout device 82 at each of the picking stations P1 to P3 to pick articles using the picking robot 81. The picking system can also stop the operation of the picking robot 81, allocate a staff person, and cause the staff person to pick up articles. The staff person can handle the articles while visually confirming an article handling schedule or the like displayed on a display device. The display device may be a wireless communication terminal assigned to the staff person.

The picking stations P1 to P3 may be provided with the display devices, and some of the picking stations may be provided with the picking robot 81 and the takeout device 82. In this case, the picking station not provided with the picking robot 81 and the takeout device 82 is used as a picking station for a staff person. The picking station provided with the takeout device 82 is used as a picking station for a staff person. The picking station provided with the picking robot 81 and the takeout device 82 is used as a picking station for a robot. The picking station provided with the picking robot 81 and the takeout device 82 can be used as a picking station for the picking robot 81 or a picking station for a staff person.

The picking system may include a plurality of cameras. Further, one or several cameras among the plurality of cameras may be fixed cameras and the remaining cameras may be movable cameras. The fixed camera is a camera fixed to, for example, a ceiling, a wall surface, and a top surface and a side surface or the like that face the picking stations P1 to P3. The camera captures the entire warehouse and articles handled in the warehouse, and outputs captured data in real time. The captured data includes captured date and time data (including captured time) and captured image data. The captured image data is still image data and moving image data. In addition, the fixed camera may rotate vertically and horizontally. By rotating the fixed camera vertically and horizontally, the inside of the warehouse can be monitored over a wide range.

The rack transport AGV 7 operates based on a control signal from an AGV control device 30 described later. For example, the rack transport AGV 7 travels toward a designated loading position and lifts AGV racks 201 to 230 at the designated loading position. The rack transport AGV 7 travels toward a designated unloading position and unloads the AGV racks 201 to 230 at the designated unloading position.

The AGV racks 201 to 230 (storage mechanism) are AGV racks for storing articles. Herein, the AGV racks 201 to 230 are formed by a plurality of tiers. Each tier has compartments. Each compartment accommodates a case for storing an article. Alternatively, a compartment may be formed in one case accommodated in each tier.

The AGV racks 201 to 230 stand upright on four posts. The height of an under-rack space below the AGV racks 201 to 230 (the height from the floor surface to the bottom of the AGV rack) is higher than the height of the rack transport AGV 7. Accordingly, the rack transport AGV 7 can enter the under-rack space below the AGV racks 201 to 230. The rack transport AGV 7 which has entered the under-rack space lifts the AGV racks 201 to 230 with a pusher to such an extent that the distal ends of the posts are separated from the floor surface by several centimeters, and travels in a state in which the AGV racks 201 to 230 are being lifted. In this way, the rack transport AGV 7 transports the AGV racks 201 to 230.

AGV rack identification information that can be read by a fixed camera, a movable camera, or the like may be attached to the AGV racks 201 to 230. Article identification information that can be read by a fixed camera, a mobile camera, or the like may also be attached to the article. For example, the AGV rack identification information and the article identification information are bar codes or two-dimensional codes. The picking system may include a plurality of readers that read the AGV rack identification information and the article identification information separately from the fixed camera or the movable camera.

The AGV racks 201 to 230 are divided into a plurality of groups. Herein, the AGV racks 201 to 230 are grouped by owners of stored articles. The AGV racks 201 to 210 belong to a group of AGV racks that store articles of an owner A. The AGV racks 211 to 220 belong to a group of AGV racks that store articles of an owner B. The AGV racks 211 to 230 belong to a group of AGV racks that store articles of an owner C.

The AGV racks of each group may be arranged together or may be arranged separately.

The picking system 100 may include AGV racks not belonging to any group.

Next, a control system of the picking system 100 will be described.

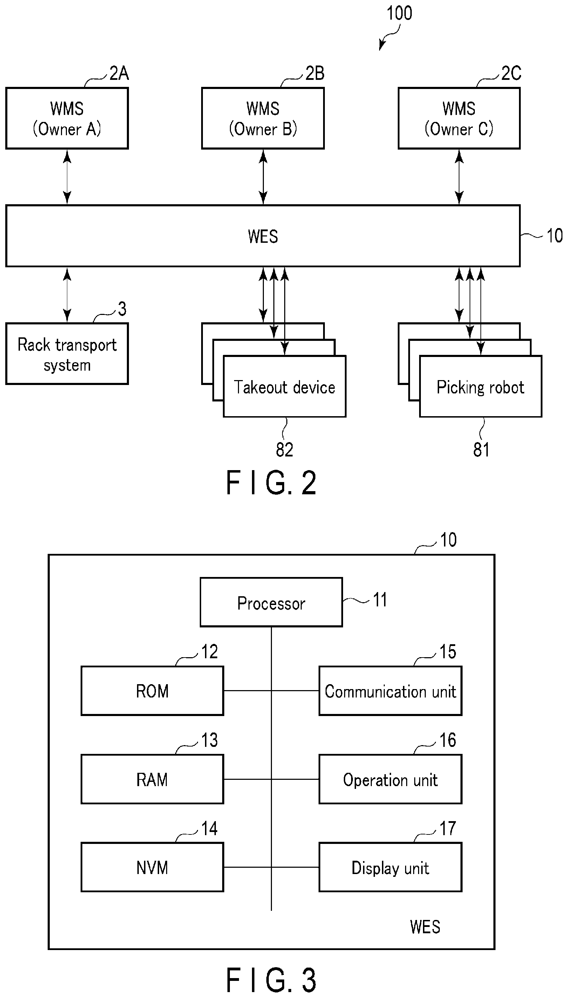

FIG. 2 is a block diagram illustrating a configuration example of a control system of the picking system 100 according to the embodiment.

As shown in FIG. 2, the picking system 100 includes WMSs 2 (2A to 2C), a rack transport system 3, a WES 10, a picking robot 81, a takeout device 82, and the like.

The WMS 2 (Warehouse Management System) (warehouse system) is called a warehouse management system and can be realized by one or a plurality of computers. The WMS 2 transmits a storage order to the WES 10 to provide an instruction to store articles in the AGV racks 201 to 230. The WMS 2 transmits a retrieval order to the WES 10 to provide an instruction to pick articles from the AGV racks 201 to 230.

Herein, the picking system 100 includes WMSs 2A to 2C as the WMS 2. Each WMS 2 corresponds to an owner. That is, each WMS 2 transmits a storage order and a retrieval order of a predetermined owner to the WES 10.

Herein, the WMS 2A transmits a storage order and a retrieval order of the owner A to the WES 10. The WMS 2B transmits a storage order and a retrieval order of the owner B to the WES 10. The WMS 2C transmits a storage order and a retrieval order of the owner C to the WES 10.

The WES 10 (Warehouse Execution System) (information processing apparatus) is called a warehouse operation management system and can be realized by one or more computers. The WES 10 is connected to the WMS 2, the rack transport system 3, the picking robot 81, and the takeout device 82. The WES 10 controls the rack transport system 3, the picking robot 81, the takeout device 82, and the like based on the storage order, the retrieval order, and the like from the WMS 2. The WES 10 will be described in detail later.

The rack transport system 3 (automated transport system) includes the rack transport AGV 7. The rack transport system 3 transports the AGV racks 201 to 230 to the picking station P using the rack transport AGV 7 under the control of the WES 10. The rack transport system 3 returns the AGV racks 201 to 230 from the picking station P to the original position. The rack transport system 3 will be described in detail later.

The takeout device 82 takes out the cases from the AGV racks 201 to 230 at the picking station P. For example, the takeout device 82 is configured by a holding mechanism that detachably holds the case, an arm that moves the holding mechanism, and a moving mechanism that moves the holding mechanism and the arm.

The picking robot 81 picks an article from the case taken out by the takeout device 82. For example, the picking robot 81 is configured by a gripping mechanism that grips an article, and an arm that moves the gripping mechanism.

The picking stations P1 to P3 receive the AGV racks 201 to 230 transported by the rack transport AGV 7. Upon the picking stations P1 to P3 receiving the AGV racks 201 to 230, the takeout device 82 takes out the cases from the transported AGV racks 201 to 230. Upon the takeout device 82 taking out the cases, the picking robot 81 grips and picks the articles stored in the cases. Furthermore, the picking robot 81 grips articles placed on a placement table or the like and puts the articles into the cases. The gripping method performed by the picking robot 81 may be any method as long as an article can be moved, such as a gripping method by sandwiching, a gripping method by suction, or a scooping method.

Upon the picking stations P1 to P3 receiving the AGV racks 201 to 230, the staff person may manually grip and pick the articles stored in the cases of the AGVs 201 to 230. The display devices provided corresponding to the picking stations P1 to P3 display information for supporting the picking operation of the staff person, for example, an image of the article to be handled, and article identification information, in addition to the article handling schedule. The staff person visually checks display contents of the display device and picks the article. Furthermore, the staff person visually checks display contents of the display device, grips the articles placed on a placement table or the like, and puts the articles into the cases of the AGV racks 201 to 230.

Next, the WES 10 will be described.

FIG. 3 shows a configuration example of the WES 10 according to the embodiment. FIG. 3 is a block diagram showing a configuration example of the WES 10. As shown in FIG. 3, the WES 10 includes a processor 11, a ROM 12, a RAM 13, an NVM 14, a communication unit 15, an operation unit 16, a display unit 17, and the like.

The processor 11, the ROM 12, the RAM 13, the NVM 14, the communication unit 15, the operation unit 16, and the display unit 17 are connected to each other via a bus or the like.

The WES 10 may include other configurations as needed in addition to the configuration illustrated in FIG. 3, or a specific configuration may be excluded from the WES 10.

The processor 11 (first processor) has a function of controlling the operation of the entire WES 10. The processor 11 may include an internal cache, various interfaces, and the like. The processor 11 realizes various processes by executing programs stored in advance in the internal memory, the ROM 12, or the NVM 14.

Some of the various functions realized by the processor 11 executing the programs may be realized by a hardware circuit. In this case, the processor 11 controls the functions executed by the hardware circuit.

The ROM 12 is a nonvolatile memory in which a control program, control data and the like are stored in advance. The control program and the control program stored in the ROM 12 are incorporated in advance according to the specifications of the WES 10.

The RAM 13 is a volatile memory. The RAM 13 temporarily stores data, etc. being processed by the processor 11. The RAM 13 stores various application programs based on instructions from the processor 11. The RAM 13 may store data necessary for executing the application program, an execution result of the application program, etc.

The NVM 14 is a data-writable and rewritable nonvolatile memory. For example, the NVM 14 is configured by a hard disk drive (HDD), a solid state drive (SSD), a flash memory, or the like. The NVM 14 stores control programs, applications, and various kinds of data according to the operation purpose of the WES 10.

The communication unit 15 (first interface) is an interface for transmitting and receiving data to and from the WMS 2, the rack transport system 3, the picking robot 81, the takeout device 82, and the like. The communication unit 15 is connected to the WMS 2, the rack transport system 3, the picking robot 81, the takeout device 82, and the like. For example, the communication unit 15 is an interface that supports wired or wireless LAN connection. The communication unit 15 may be configured by an interface connected to the WMS 2, an interface connected to the rack transport system 3, an interface connected to the picking robot 81, and an interface connected to the takeout device 82.

The operation unit 16 receives various operation inputs from the operator. The operation unit 16 transmits a signal indicating the input operation to the processor 11. For example, the operation unit 16 is configured by a mouse, a keyboard, a touch panel, or the like.

The display unit 17 displays image data from the processor 11. For example, the display unit 17 is configured by a liquid crystal monitor. When the operation unit 16 is configured by a touch panel, the display unit 17 may be formed integrally with the touch panel as the operation unit 16.

Next, the rack transport system 3 will be described.

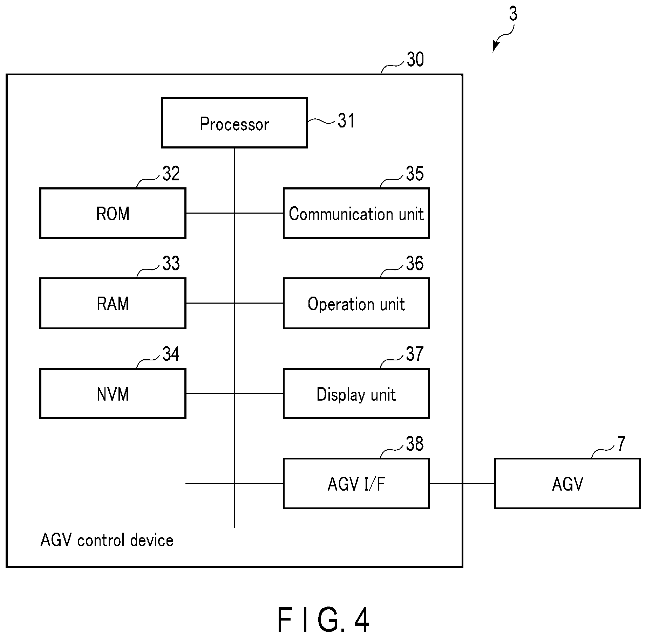

FIG. 4 shows a configuration example of the rack transport system 3 according to the embodiment. FIG. 4 is a block diagram illustrating a configuration example of the rack transport system 3. As shown in FIG. 4, the rack transport system 3 is configured by the AGV control device 30, the rack transport AGV 7, and the like.

The AGV control device 30 (control device) controls the rack transport AGV 7 under the control of the WES 10. The AGV control device 30 includes a processor 31, a ROM 32, a RAM 33, an NVM 34, a communication unit 35, an operation unit 36, a display unit 37, an AGV interface 38, and the like.

The processor 31, the ROM 32, the RAM 33, the NVM 34, the communication unit 35, the operation unit 36, the display unit 37, and the AGV interface 38 are connected to each other via a bus or the like.

The AGV control device 30 may include other configurations as needed in addition to the configuration illustrated in FIG. 4, or a specific configuration may be excluded from the AGV control device 30.

The processor 31 (second processor) has a function of controlling the operation of the entire AGV control device 30. The processor 31 may include an internal cache, various interfaces, and the like. The processor 31 realizes various processes by executing programs stored in advance in the internal memory, the ROM 32, or the NVM 34.

Some of the various functions realized by the processor 31 executing the programs may be realized by a hardware circuit. In this case, the processor 31 controls the functions executed by the hardware circuit.

The ROM 32 is a nonvolatile memory in which a control program, control data and the like are stored in advance. The control program and the control data stored in the ROM 32 are incorporated in advance according to the specifications of the AGV control device 30.

The RAM 33 is a volatile memory. The RAM 33 temporarily stores data, etc. being processed by the processor 31. The RAM 33 stores various application programs based on instructions from the processor 31. The RAM 33 may store data necessary for executing the application program, an execution result of the application program, etc.

The NVM 34 is a data-writable and rewritable nonvolatile memory. For example, the NVM 34 is configured by an HDD, an SSD, a flash memory, or the like. The NVM 34 stores control programs, applications, and various kinds of data according to the purpose of use of the AGV control device 30.

The NVM 34 stores attribute information indicating to which group the AGV racks 201 to 230 belong. For example, the attribute information stores AGV rack information (e.g., an AGV rack ID) for identifying the AGV racks 201 to 230 and owner information (e.g., an owner ID) for identifying an owner in association with each other.

The communication unit 35 (second interface) is an interface that transmits and receives data to and from the WES 10 or the like. The communication unit 35 is connected to the WES 10 or the like. For example, the communication unit 35 is an interface that supports wired or wireless LAN connection.

The operation unit 36 receives various operation inputs from the operator. The operation unit 36 transmits a signal indicating the input operation to the processor 31. For example, the operation unit 36 is configured by a mouse, a keyboard, a touch panel, or the like.

The display unit 37 displays image data from the processor 31. For example, the display unit 37 is configured by a liquid crystal monitor. When the operation unit 36 is configured by a touch panel, the display unit 37 may be formed integrally with the touch panel as the operation unit 36.

The AGV interface 38 (third interface) is an interface that transmits and receives data to and from the rack transport AGV 7. The AGV interface 38 is connected to the rack transport AGV 7. For example, the communication unit 35 is connected to the rack transport AGV 7 through a wireless access point or the like connected to the rack transport AGV 7. For example, the AGV interface 38 is an interface that supports wired or wireless LAN connection.

Next, functions realized by the WES 10 will be described. The functions realized by the WES 10 are realized by the processor 11 executing a program stored in the ROM 12 or the NVM 14.

First, the processor 11 has a function of receiving the storage order and the retrieval order from the WMS 2 through the communication unit 15.

As described above, the WMS 2 transmits the storage order and the retrieval order to the WES 10.

The processor 11 receives the storage order and the retrieval order from the WMS 2 through the communication unit 15. For example, the processor 11 receives the storage order and the retrieval order through a push notification.

The processor 11 may transmit a request for requesting the storage order and the retrieval order to the WMS 2 at a predetermined timing. The processor 11 may receive the storage order and the retrieval order from the WMS 2 as a response to the request.

For example, the storage order includes article identification information for identifying an article to be stored, and a quantity. The retrieval order includes article identification information for identifying an article to be retrieved, a quantity, and a delivery destination.

The processor 11 has a function of transmitting the storage order and the retrieval order to which owner information is added to the rack transport system 3 through the communication unit 15.

First, an operation example in which the processor 11 transmits the storage order to which the owner information is added to the rack transport system 3 will be described.

Upon receipt of the storage order, the processor 11 specifies an owner of the storage order. For example, the processor 11 specifies the WMS 2 that has transmitted the storage order to specify the owner.

Upon specifying the owner of the storage order, the processor 11 generates owner information for identifying the specified owner. Upon generating the owner information, the processor 11 adds the generated owner information to the storage order. The processor 11 transmits the storage order to which the owner information is added to the rack transport system 3 through the communication unit 15.

Next, an operation example in which the processor 11 transmits the retrieval order to which the owner information is added to the rack transport system 3 will be described.

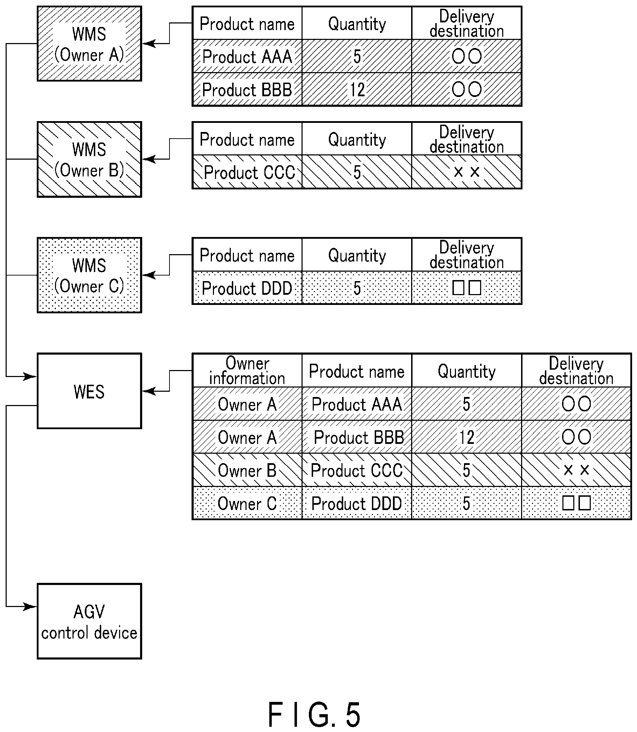

FIG. 5 is a diagram illustrating an operation example in which the processor 11 transmits the retrieval order to which the owner information is added to the rack transport system 3.

The processor 11 receives the retrieval order. Herein, the retrieval order indicates the name of the product (article) as the article identification information. Furthermore, as described above, the retrieval order indicates the quantity and the delivery destination.

Upon receipt of the retrieval order, the processor 11 specifies the owner of the retrieval order. For example, the processor 11 specifies the WMS 2 that has transmitted the retrieval order to specify the owner.

Upon specifying the owner of the retrieval order, the processor 11 generates owner information for identifying the specified owner. Herein, the owner information includes the name of the owner (owner A or the like).

Upon generating the owner information, the processor 11 adds the generated owner information to the retrieval order. The processor 11 transmits the retrieval order to which the owner information is added to the rack transport system 3 through the communication unit 15.

The processor 11 has a function of generating or updating a report on an article for each owner.

Upon completion of the processing of the storage order or the retrieval order, the processor 11 receives a notification (completion notification) indicating that the storage order or the retrieval order is completed from the rack transport system 3 through the communication unit 15. Upon receipt of the completion notification, the processor 11 generates or updates a report of the owner of the storage order or the retrieval order.

The report includes article identification information indicating articles stored in the AGV racks 201 to 230, the quantity, and the like. The report may include a storage history or a retrieval history of articles. The configuration of the report is not limited to a specific configuration.

If the NVM 14 is not storing the report of the owner, the processor 11 generates a report of the owner and stores the report in the NVM 14. If the NVM 14 is storing the report of the owner, the processor 11 updates the report.

Next, functions realized by the AGV control device 30 will be described. The functions realized by the AGV control device 30 are realized by the processor 31 executing a program stored in the ROM 32, the NVM 34, or the like.

First, the processor 31 has a function of receiving the storage order and the retrieval order from the WES 10 through the communication unit 35.

As described above, the WES 10 transmits the storage order and the retrieval order to which the owner information is added to the rack transport system 3.

The processor 31 receives the storage order and the retrieval order from the WMS 2 through the communication unit 35. For example, the processor 31 receives the storage order and the retrieval order through a push notification.

The processor 31 may transmit a request for requesting the storage order and the retrieval order to the WES 10 at a predetermined timing. The processor 31 may receive the storage order and the retrieval order from the WES 10 as a response to the request.

The processor 31 has a function of transporting one of the AGV racks 201 to 230 to the picking station P based on the received storage order.

Upon receipt of the storage order, the processor 31 extracts owner information from the storage order. Upon extracting the owner information, the processor 31 specifies a group of the AGV racks 201 to 230 corresponding to the extracted owner information. Upon specifying the group, the processor 31 determines whether or not there is a vacancy for storing an article indicated by the storage order in the AGV racks belonging to the group.

Upon determining that there is a vacant AGV rack, the processor 31 transports the vacant AGV rack to one of the picking stations P using the rack transport AGV 7 through the AGV interface 38. For example, the processor 31 sets a route from the current position of the rack transport AGV 7 to the AGV rack, and moves the rack transport AGV 7 along the route. Upon moving the rack transport AGV 7, the processor 31 drives a pusher or the like of the rack transport AGV 7 to load the AGV rack on the rack transport AGV 7. Upon loading the AGV rack, the processor 31 sets a route from the current position of the rack transport AGV 7 to the picking station P, and moves the rack transport AGV 7 along the route.

Upon determining that there is no vacancy in the AGV racks, the processor 31 assigns an AGV rack not belonging to the group to the group of the owner indicated by the owner information. That is, the processor 31 stores the AGV rack information of the AGV rack and the owner information in association with the attribute information.

Upon assigning the AGV rack not belonging to the group to the group of the owner indicated by the owner information, the processor 31 transports the AGV rack to one of the picking stations P using the rack transport AGV 7 through the AGV interface 38.

The processor 31 has a function of performing storing operation on the AGV rack transported to the picking station P.

Herein, it is assumed that articles of the quantity indicated by the storage order are transported to the picking station P.

Upon transporting the AGV rack to one of the picking stations P, the processor 31 stores an article in the AGV rack.

If the picking station P includes the picking robot 81 and the takeout device 82, the processor 31 takes out the case from the transported AGV rack using the takeout device 82. Upon the takeout device 82 taking out the case, the processor 31 causes the picking robot 81 to grip the article and put the article into the case. Upon the picking robot 81 putting the article into the case, the processor 31 returns the case to the AGV rack using the takeout device 82.

If the picking station P has a staff person, the processor 31 displays, on the display device of the picking station P, an instruction to put the article into the case of the AGV rack. The processor 31 receives an input of an operation indicating that depositing the article is completed from the staff person through the display device or the like.

Upon completion of the storing operation, the processor 31 transports the AGV rack from the picking station P to the original position using the rack transport AGV 7 through the AGV interface 38. Upon transporting the AGV rack from the picking station P to the original position using the rack transport AGV 7, the processor 31 transmits a completion notification indicating that the processing of the storage order is completed to the WES 10 through the communication unit 35.

The processor 31 has a function of transporting one of the AGV racks 201 to 230 to the picking station P based on the received retrieval order.

Upon receipt of the retrieval order, the processor 31 extracts the owner information from the retrieval order. Upon extracting the owner information, the processor 31 specifies a group of the AGV racks 201 to 230 corresponding to the extracted owner information. Upon specifying the group, the processor 31 specifies the AGV rack that stores the article indicated by the retrieval order from the AGV racks constituting the group.

Upon specifying the AGV rack, the processor 31 transports the AGV rack to one of the picking stations P using the rack transport AGV 7 via the AGV interface 38.

The processor 31 has a function of performing retrieval operation from the AGV rack transported to the picking station P.

Upon transporting the AGV rack to one of the picking stations P, the processor 31 picks the article from the AGV rack.

If the picking station P includes the picking robot 81 and the takeout device 82, the processor 31 takes out the case from the transported AGV rack using the takeout device 82. Upon the takeout device 82 taking out the case, the processor 31 causes the picking robot 81 to pick the article from the case. Upon the picking robot 81 picking the article, the processor 31 returns the case to the AGV rack using the takeout device 82. The picked article is put into a predetermined case or the like.

If the picking station P has a staff person, the processor 31 displays, on the display device of the picking station P, an image or the like indicating the article to be picked. The processor 31 receives an input of an operation indicating that picking the article is completed from the staff person through the display device or the like.

Upon completion of the retrieval operation, the processor 31 transports the AGV rack from the picking station P to the original position (or the nearest vacant place) using the rack transport AGV 7 through the AGV interface 38. Upon transporting the AGV rack from the picking station P to the original position using the rack transport AGV 7, the processor 31 transmits a completion notification indicating that the processing of the retrieval order is completed to the WES 10 through the communication unit 35.

Next, an operation example of the picking system 100 will be described.

First, an operation example in which the picking system 100 performs the storing operation will be described.

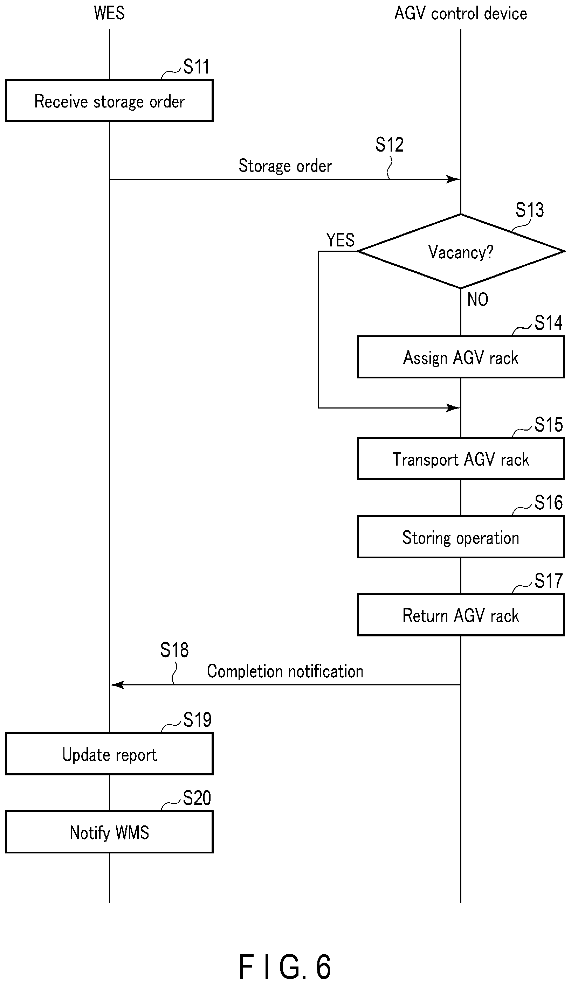

FIG. 6 is a sequence diagram illustrating an operation example in which the picking system 100 performs the storing operation.

First, the processor 11 of the WES 10 receives a storage order from one of the WMSs 2 through the communication unit 15 (S11). Upon receipt of the storage order, the processor 11 transmits the storage order to which owner information indicating the owner of the storage order is added to the AGV control device 30 through the communication unit 15 (S12).

The processor 31 of the AGV control device 30 receives the storage order through the communication unit 35. Upon receipt of the storage order, the processor 31 determines whether or not there is a vacancy in the AGV racks belonging to the group of the owner of the storage order (S13) .

Upon determining that there is no vacancy in the AGV racks (S13, NO), the processor 31 newly assigns an AGV rack to the group of the owner (S14).

If it is determined that there is a vacancy in the AGV racks (S13, NO), or if a new AGV rack is assigned to the group of the owner (S14), the processor 31 transports the AGV rack belonging to the group of the owner to the picking station P using the rack transport AGV 7 through the AGV interface 38 (S15).

Upon transporting the AGV rack to the picking station P, the processor 31 performs storing operation to the AGV rack (S16). Upon performing the storing operation to the AGV rack, the processor 31 transports the AGV rack from the picking station P to the original position using the rack transport AGV 7 through the AGV interface 38 (S17).

Upon transporting the AGV rack from the picking station P to the original position, the processor 31 transmits a completion notification indicating that the storing operation is completed to the WES 10 through the communication unit 35 (S18).

The processor 11 of the WES 10 receives the completion notification through the communication unit 15. Upon receipt of the completion notification, the processor 11 generates or updates a report of the owner (S19). Upon generating or updating the report of the owner, the processor 11 transmits a completion notification indicating that the storing operation is completed to the WMS 2 through the communication unit 15 (S20).

Upon the processor 11 transmitting the completion notification to the WMS 2, the picking system 100 ends the operation.

The processor 31 may continuously store a plurality of articles or a plurality of types of articles in the AGV rack transported to the picking station P.

The processor 31 may execute S13 to S18 for a plurality of storage orders simultaneously in parallel.

Next, an operation example in which the picking system 100 performs the retrieval operation will be described.

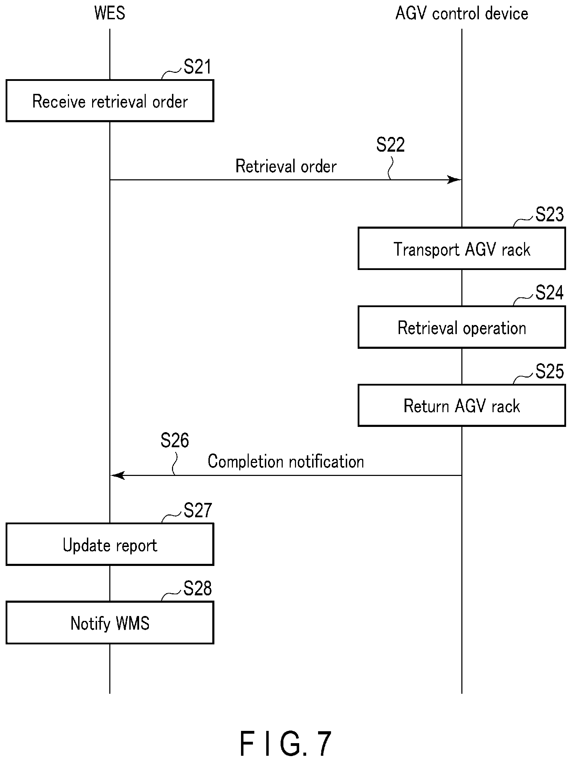

FIG. 7 is a sequence diagram illustrating an operation example in which the picking system 100 performs the retrieval operation.

First, the processor 11 of the WES 10 receives a retrieval order from one of the WMSs 2 through the communication unit 15 (S21). Upon receipt of the retrieval order, the processor 11 transmits the retrieval order to which owner information indicating the owner of the delivery order is added to the AGV control device 30 through the communication unit 15 (S22).

The processor 31 of the AGV control device 30 receives the retrieval order through the communication unit 35. Upon receipt of the retrieval order, the processor 31 transports the AGV rack that belongs to the group of the owner and stores the article of the retrieval order to the picking station P using the rack transport AGV 7 through the AGV interface 38 (S23).

Upon transporting the AGV rack to the picking station P, the processor 31 performs the retrieval operation to the AGV rack (S24). Upon performing the retrieval operation to the AGV rack, the processor 31 transports the AGV rack from the picking station P to the original position using the rack transport AGV 7 through the AGV interface 38 (S25).

Upon transporting the AGV rack from the picking station P to the original position, the processor 31 transmits a completion notification indicating that the retrieval operation is completed to the WES 10 through the communication unit 35 (S26).

The processor 11 of the WES 10 receives the completion notification through the communication unit 15. Upon receipt of the completion notification, the processor 11 generates or updates a report of the owner (S27). Upon generating or updating the report of the owner, the processor 11 transmits a completion notification indicating that the retrieval operation is completed to the WMS 2 through the communication unit 15 (S28).

Upon the processor 11 transmitting the completion notification to the WMS 2, the picking system 100 ends the operation.

The processor 31 may continuously pick a plurality of articles or a plurality of types of articles from the AGV rack transported to the picking station P.

The processor 31 may execute S23 to S26 for a plurality of retrieval orders simultaneously in parallel.

The AGV control device 30 may be configured by a plurality of devices.

The processor 11 of the WES 10 does not necessarily have to add the owner information to the storage order and the retrieval order. In this case, the processor 11 may designate the AGV rack to be transported to the picking station P.

The processor 11 may transmit the report to the WMS 2 through the communication unit 15.

The picking system configured as described above groups the AGV racks for each owner. Upon receiving the storage order or the retrieval order from the owner, the picking system stores the article in the AGV rack belonging to the group of the owner or picks the article from the AGV rack. Thereby, the picking system can effectively process articles from multiple owners.

### (Second Embodiment)

Next, the second embodiment will be described.

The picking system 100 according to the second embodiment is different from that according to the first embodiment in that the owner of the package assigned to each picking station P is fixed. Therefore, the same reference numerals are given to the other points, and the detailed description thereof will be omitted.

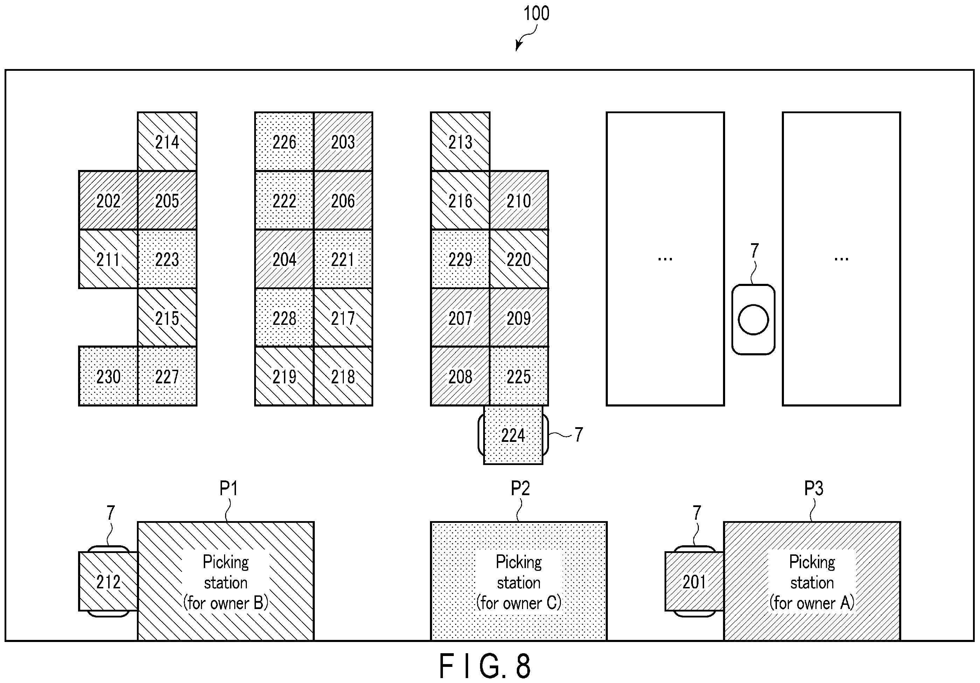

FIG. 8 is a diagram illustrating a configuration example of the picking system 100. In the example shown in FIG. 8, an owner B is assigned to the picking station P1. An owner C is assigned to the picking station P2. An owner A is assigned to the picking station P3.

The AVG racks (herein the AGV racks 211 to 220) belonging to the group of the owner B are transported to the picking station P1. The AVG racks (herein the AGV racks 221 to 230) belonging to the group of the owner C are transported to the picking station P2. The AVG racks (herein the AGV racks 201 to 210) belonging to the group of the owner A are transported to the picking station P3.

The NVM 34 of the AGV control device 30 stores in advance allocation information indicating the owner allocated to each picking station P. For example, the allocation information stores information for identifying the picking station P and owner information for identifying the owner in association with each other.

For example, the processor 31 stores or updates the allocation information in the NVM 34 in accordance with an operation of the operator or the like.

Next, functions realized by the AGV control device 30 will be described. The functions realized by the AGV control device 30 are realized by the processor 31 executing a program stored in the ROM 32, the NVM 34, or the like.

The functions realized by the AGV control device 30 include the following functions in addition to the functions realized by the AGV control device 30 according to the first embodiment.

The processor 31 has a function of transporting one of the AGV racks 201 to 230 to the picking station P based on the received storage order and the allocation information and performing storing operation.

Upon receipt of the storage order, the processor 31 extracts owner information from the storage order. Upon extracting the owner information, the processor 31 specifies the picking station P corresponding to the owner indicated by the extracted owner information by referring to the allocation information.

Herein, the processor 31 determines whether or not there is a vacancy for storing the article indicated by the storage order in the AGV racks belonging to the group of the owner, as in the first embodiment.

If there is a vacancy in the AGV rack or if a new AGV rack is assigned to the group of the owner, the processor 31 transports the AGV rack (the vacant AGV rack or the newly assigned AGV rack) to the specified picking station P using the rack transport AGV 7 through the AGV interface 38.

Upon transporting the AGV rack to the specified picking station P, the processor 31 performs storing operation as in the first embodiment.

The processor 31 has a function of transporting one of the AGV racks 201 to 230 to the picking station P based on the received retrieval order and the allocation information and performing retrieval operation.

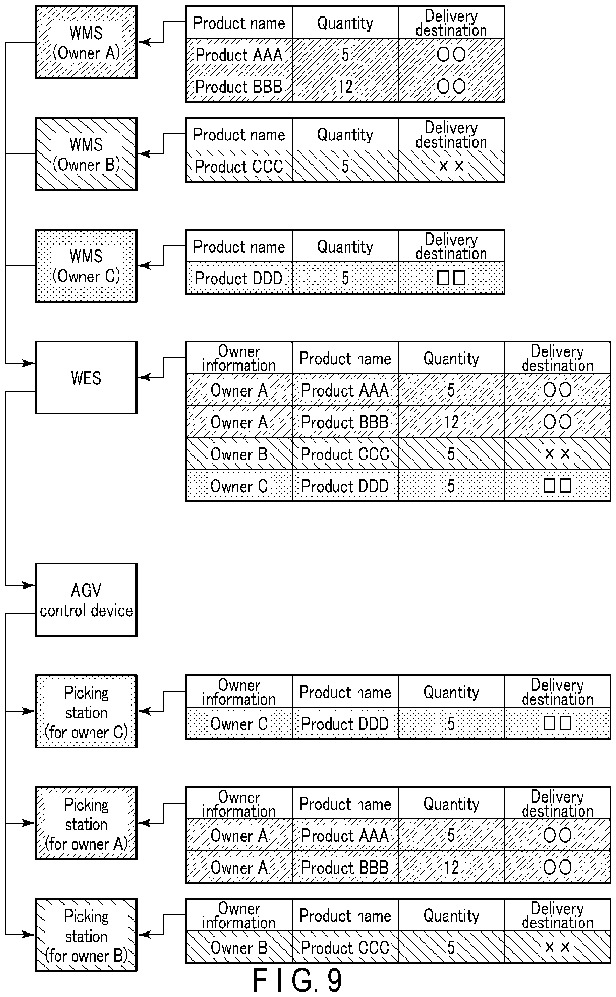

FIG. 9 shows an operation example in which the processor 31 transports one of the AGV racks 201 to 230 to the picking station P and performs the retrieval operation. In FIG. 9, as in the first embodiment, the processor 11 of the WES 10 transmits the retrieval order to which the owner information is added to the AGV control device 30.

The processor 31 receives the retrieval order from the WMS 2. Upon receipt of the retrieval order, the processor 31 extracts the owner information from the retrieval order. Upon extracting the owner information, the processor 31 specifies the picking station P corresponding to the owner indicated by the extracted owner information by referring to the allocation information.

Upon specifying the picking station P, the processor 31 specifies a group of the AGV racks 201 to 230 corresponding to the extracted owner information. Upon specifying the group, the processor 31 specifies the AGV rack that stores the article indicated by the retrieval order from the AGV racks belonging to the group.

Upon specifying the AGV rack, the processor 31 transports the AGV rack to the specified picking station P using the rack transport AGV 7 via the AGV interface 38.

Upon transporting the AGV rack to the specified picking station P, the processor 31 performs retrieval operation as in the first embodiment.

An operation example in which the picking system 100 performs the storing operation and the retrieval operation is the same as that of the first embodiment, and thus the description thereof will be omitted.

The picking system configured as described above fixes the owner for each picking station. Thus, the picking system processes orders from the same owner at the same picking station. Therefore, the picking system can easily grasp the operation situation or take measures in accordance with the operation rules for each owner.

### (Third Embodiment)

The picking system 100 according to the third embodiment is different from that according to the second embodiment in that the compartments of the AGV racks are grouped for each owner. Therefore, the same reference numerals are given to the other points, and the detailed description thereof will be omitted.

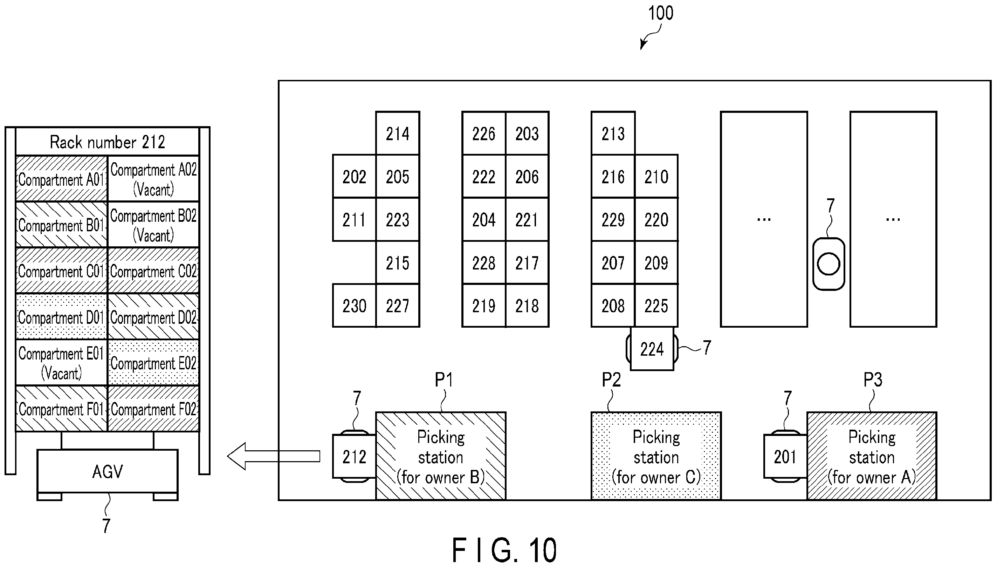

FIG. 10 is a diagram illustrating a configuration example of the picking system 100. With FIG. 10, the group of the compartments will be described using the AGV rack 212 as an example.

As shown in FIG. 10, the AGV rack 212 includes six rack tiers. The AGV rack 212 includes two compartments on each rack tier. That is, the AGV rack 212 is provided with a compartment A01, a compartment A02, a compartment B01, a compartment B02, a compartment C01, a compartment C02, a compartment D01, a compartment D02, a compartment E01, a compartment E02, a compartment F01, and a compartment F02 (storage mechanism).

Herein, the compartment A01, the compartment C01, the compartment C02, and the compartment F02 belong to the group of the owner A. The compartment B01, the compartment D02, and the compartment F01 belong to the group of the owner B. The compartment D01 and the compartment E02 belong to the group of the owner C.

The compartment A02, the compartment B02, and the compartment E01 do not belong to any group.

The NVM 34 of the AGV control device 30 stores attribute information indicating to which group each compartment belongs. For example, the attribute information stores compartment information (for example, a compartment ID) for identifying a compartment and owner information (for example, an owner ID) for specifying an owner in association with each other. The NVM 34 may store information indicating the compartment of each AGV rack.

Next, functions realized by the AGV control device 30 will be described. The functions realized by the AGV control device 30 are realized by the processor 31 executing a program stored in the ROM 32, the NVM 34, or the like.

The functions realized by the AGV control device 30 include the following functions in addition to the functions realized by the AGV control device 30 according to the second embodiment.

The processor 31 has a function of transporting the AGV rack to the picking station P based on the received storage order, allocation information, and attribute information.

Upon receipt of the storage order, the processor 31 extracts owner information from the storage order. Upon extracting the owner information, the processor 31 specifies the picking station P corresponding to the owner indicated by the extracted owner information with reference to the allocation information.

Upon specifying the picking station P, the processor 31 specifies a group of the compartment corresponding to the extracted owner information. Upon specifying the group, the processor 31 determines whether or not there is a vacancy for storing an article indicated by the storage order in the compartments belonging to the group. That is, it is determined whether or not there is a vacancy in the case stored in the compartment.

Upon determining that there is a vacancy in the compartment, the processor 31 transports the AGV rack having the vacant compartment to the specified picking station P using the rack transport AGV 7 through the AGV interface 38.

Upon determining that there is no vacancy in the AGV racks, the processor 31 assigns a compartment not belonging to the group to the group of the owner indicated by the owner information. That is, the processor 31 stores the attribute information in association with the compartment information of the compartment and the owner information.

Upon assigning the compartment not belonging to the group to the group of the owner indicated by the owner information, the processor 31 transports the AGV rack including the compartment to the specified picking station P using the rack transport AGV 7 through the AGV interface 38.

The processor 31 has a function of performing storing operation on the AGV rack transported to the picking station P.

Herein, it is assumed that articles of the quantity indicated by the storage order are transported to the picking station P.

Upon transporting the AGV rack to one of the picking stations P, the processor 31 stores an article in the AGV rack.

If the picking station P includes the picking robot 81 and the takeout device 82, the processor 31 takes out the case from the compartment (the vacant compartment or the newly assigned compartment) of the transported AGV rack using the takeout device 82. Upon the takeout device 82 taking out the case, the processor 31 causes the picking robot 81 to grip the article and put the article into the case. Upon the picking robot 81 putting the article into the case, the processor 31 returns the case to the AGV rack using the takeout device 82.

If the picking station P has a staff person, the processor 31 displays, on the display device of the picking station P, an instruction to put the article into the case of the compartment. The processor 31 receives an input of an operation indicating that depositing the article is completed from the staff person through the display device or the like.

Upon completion of the storing operation, the processor 31 transports the AGV rack from the picking station P to the original position using the rack transport AGV 7 through the AGV interface 38. Upon transporting the AGV rack from the picking station P to the original position using the rack transport AGV 7, the processor 31 transmits a completion notification indicating that the processing of the storage order is completed to the WES 10 through the communication unit 35.

The processor 31 has a function of transporting one of the AGV racks 201 to 230 to the picking station P based on the received retrieval order, allocation information, and attribute information.

Upon receipt of the retrieval order, the processor 31 extracts the owner information from the retrieval order. Upon extracting the owner information, the processor 31 specifies the picking station P corresponding to the owner indicated by the extracted owner information by referring to the allocation information.

Upon specifying the picking station P, the processor 31 specifies a group of the compartment corresponding to the extracted owner information. Upon specifying the group, the processor 31 specifies the compartment that stores the article indicated by the retrieval order from the compartments belonging to the group.

Upon specifying the compartment, the processor 31 transports the AGV rack having the compartment to the specified picking station P using the rack transport AGV 7 via the AGV interface 38.

The processor 31 has a function of performing retrieval operation from the AGV rack transported to the picking station P.

Upon transporting the AGV rack to the picking station P, the processor 31 picks the article from the AGV rack.

If the picking station P includes the picking robot 81 and the takeout device 82, the processor 31 takes out the case from the compartment of the transported AGV rack using the takeout device 82. Upon the takeout device 82 taking out the case, the processor 31 picks the article from the case using the picking robot 81. Upon the picking robot 81 picking the article, the processor 31 returns the case to the AGV rack using the takeout device 82. The picked article is put into a predetermined case or the like.

If the picking station P has a staff person, the processor 31 displays, on the display device of the picking station P, an image or the like to provide an instruction to pick the article from the compartment. The processor 31 receives an input of an operation indicating that picking the article is completed from the staff person through the display device or the like.

Upon completion of the retrieval operation, the processor 31 transports the AGV rack from the picking station P to the original position using the rack transport AGV 7 through the AGV interface 38. Upon transporting the AGV rack from the picking station P to the original position using the rack transport AGV 7, the processor 31 transmits a completion notification indicating that the processing of the retrieval order is completed to the WES 10 through the communication unit 35.

An operation example in which the picking system 100 performs the storing operation and the retrieval operation is the same as that of the first embodiment, and thus the description thereof will be omitted.

The picking system 100 does not necessarily have to fix the owner of the package assigned to the picking station P.

The picking system configured as described above groups the compartments of the AGV racks. Therefore, the picking system can effectively utilize vacant compartments rather than grouping the AGV racks.

### (Fourth Embodiment)

Next, the fourth embodiment will be described.

The picking system 100 according to the fourth embodiment is different from that according to the first embodiment in that the worker (the staff person or the picking robot 81) picking an article is designated. Therefore, the same reference numerals are given to the other points, and the detailed description thereof will be omitted.

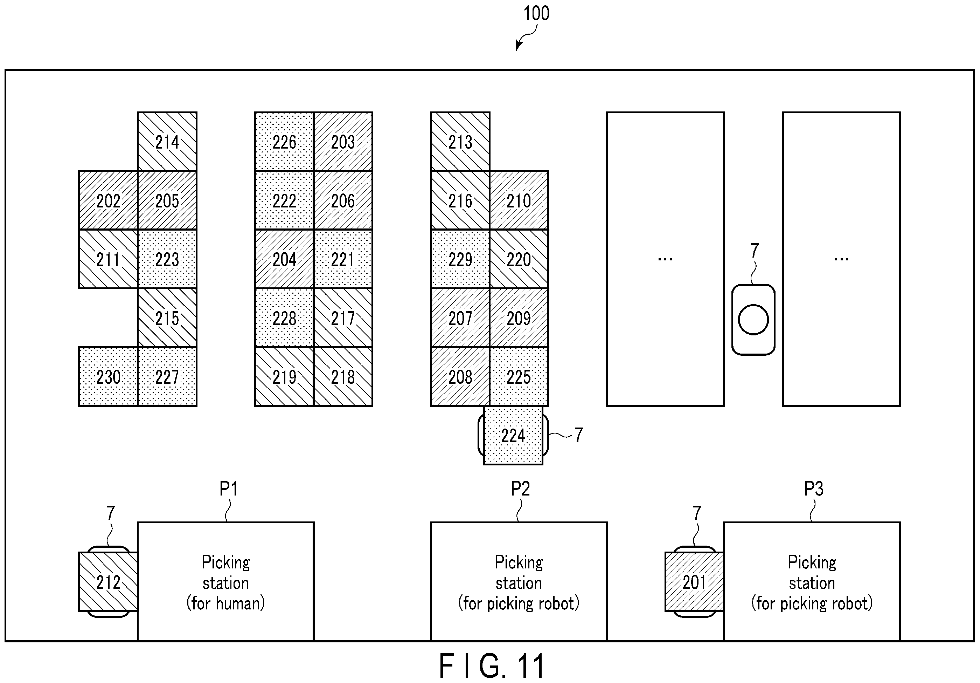

FIG. 11 is a diagram illustrating a configuration example of the picking system 100.

The picking station P1 is a picking station (human picking station) at which a staff person picks or stores an article.

The picking stations P2 and P3 are picking stations (picking robot picking stations) at which the picking robot 81 picks or stores an article. That is, the picking robot 81 and the takeout device 82 are installed in the picking stations P2 and P3.

The NVM 34 of the AGV control device 30 may store information indicating which picking station P is a human picking station or a robot picking station.

In the following description, it is assumed that the picking system 100 performs the retrieval operation.

Next, functions realized by the WES 10 will be described. The functions realized by the WES 10 are realized by the processor 11 executing a program stored in the ROM 12 or the NVM 14.

The functions realized by the WES 10 include the following functions in addition to the functions of the WES 10 according to the first embodiment.

The processor 11 has a function of transmitting the retrieval order to which the owner information and the operation information are added to the rack transport system 3 through the communication unit 15.

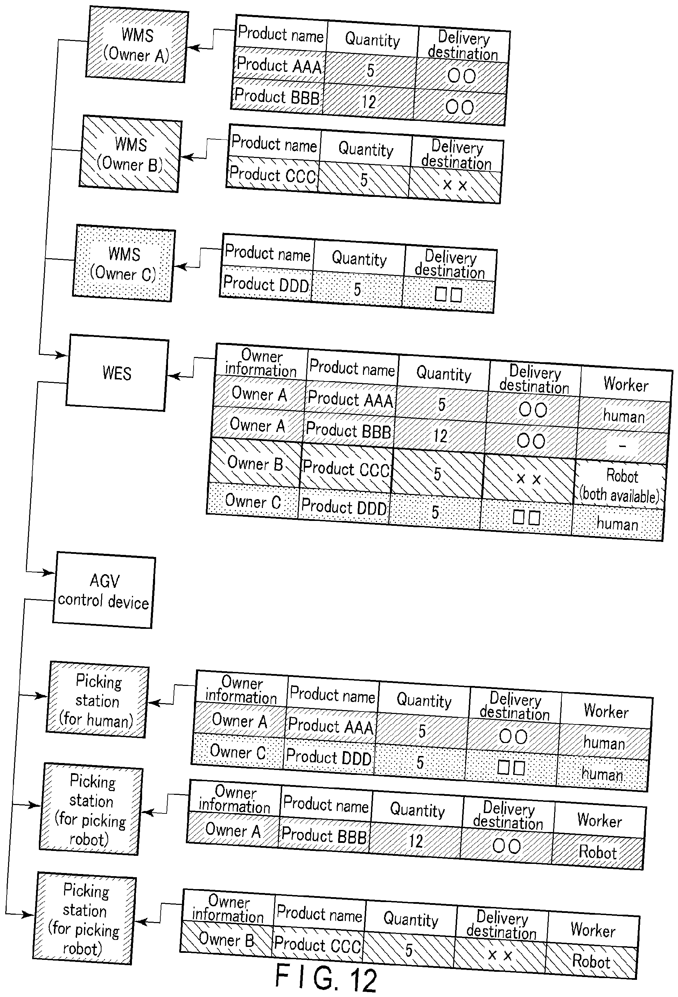

FIG. 12 is a diagram illustrating an operation example in which the processor 11 transmits the retrieval order to which the owner information and the operation information are added to the rack transport system 3.

The processor 11 receives the retrieval order. As described above, the retrieval order indicates the name of the product (article) as the article identification information. Furthermore, the retrieval order indicates the quantity and the delivery destination.

Upon receipt of the retrieval order, the processor 11 specifies the owner of the retrieval order. For example, the processor 11 specifies the WMS 2 that has transmitted the retrieval order to specify the owner.

Upon specifying the owner of the retrieval order, the processor 11 generates owner information for identifying the specified owner. Herein, the owner information includes the name of the owner (owner A or the like).

Upon generating the owner information, the processor 11 generates operation information indicating a worker (the staff person or the picking robot 81) that picks an article.

For example, the processor 11 generates operation information based on a characteristic of the article. The processor 11 determines a worker based on the size, shape, weight, or packing of the article as characteristics of the article, and generates operation information indicating the determined worker.

The processor 11 may generate the operation information based on the owner. For example, for an article of a predetermined owner (for example, owner A), the processor 11 generates operation information indicating the staff person (or the picking robot 81) as a worker.

The processor 11 may generate operation information indicating that the picking may be performed by either the staff person or the picking robot 81.

Upon generating the operation information, the processor 11 adds the generated owner information and operation information to the retrieval order. The processor 11 transmits the retrieval order to which the owner information and the operation information are added to the rack transport system 3 through the communication unit 15.

Next, functions realized by the AGV control device 30 will be described. The functions realized by the AGV control device 30 are realized by the processor 31 executing a program stored in the ROM 32, the NVM 34, or the like.

The functions realized by the AGV control device 30 include the following functions in addition to the functions of the AGV control device 30 according to the first embodiment.

The processor 31 has a function of transporting one of the AGV racks 201 to 230 to the picking station P based on the received retrieval order.

Upon receipt of the retrieval order, the processor 31 extracts the owner information from the retrieval order. Upon extracting the owner information, the processor 31 specifies a group of the AGV racks 201 to 230 corresponding to the extracted owner information. Upon specifying the group, the processor 31 specifies the AGV rack that stores the article indicated by the retrieval order from the AGV racks constituting the group.

Upon specifying the AGV rack, the processor 31 extracts the operation information from the retrieval order. Upon extracting the operation information, the processor 31 determines a picking station P serving as a transport destination of the AGV rack based on the operation information.

FIG. 12 shows an operation example in which the processor 31 determines the transport destination of the AGV rack.

For example, when the operation information indicates a human (a staff person), the processor 31 determines the human picking station P (herein, the picking station P1) as the transport destination. When the operation information indicates the robot (the picking robot 81), the processor 31 determines the robot picking station P (herein, the picking station P2 or P3) as the transport destination.

When the operation information indicates that both of them are available (either the staff person or the picking robot 81 may pick the article), the processor 31 determines the picking station P as the transport destination based on the vacancy or the like of the picking station P or the like. In this case, the processor 31 updates the operation information to "human" or "robot".

Upon determining the picking station P, the processor 31 transports the AGV rack to the determined picking station P using the rack transport AGV 7 through the AGV interface 38.

Next, an operation example of the picking system 100 will be described.

First, an operation example of the WES 10 will be described.

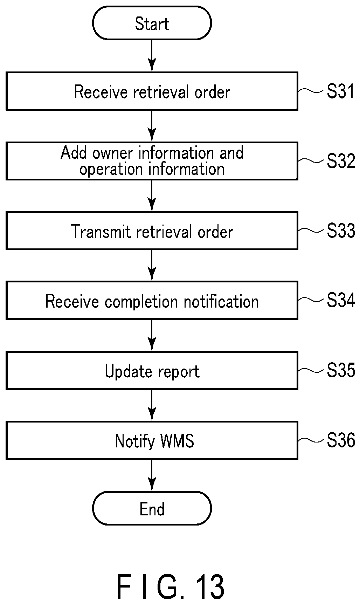

FIG. 13 is a flowchart illustrating an operation example of the WES 10.

First, the processor 11 of the WES 10 receives a retrieval order from the WMS 2 through the communication unit 15 (S31). Upon receipt of the retrieval order, the processor 11 adds the owner information and the operation information to the retrieval order (S32).

Upon adding the owner information and the operation information to the retrieval order, the processor 11 transmits the retrieval order to which the owner information and the operation information are added to the AGV control device 30 through the communication unit 15 (S33) .

Herein, it is assumed that the AGV control device 30 has completed the retrieval operation in accordance with the retrieval order.

The processor 11 receives a completion notification indicating that the processing of the retrieval order is completed from the AGV control device 30 through the communication unit 15 (S34). Upon receipt of the completion notification, the processor 11 updates the report of the owner (S35).

Upon updating the report, the processor 11 transmits a completion notification indicating that the processing of the retrieval order is completed to the WMS 2 through the communication unit 15 (S36).

Upon transmitting the completion notification, the processor 11 ends the operation.

Next, an operation example of the AGV control device 30 will be described.

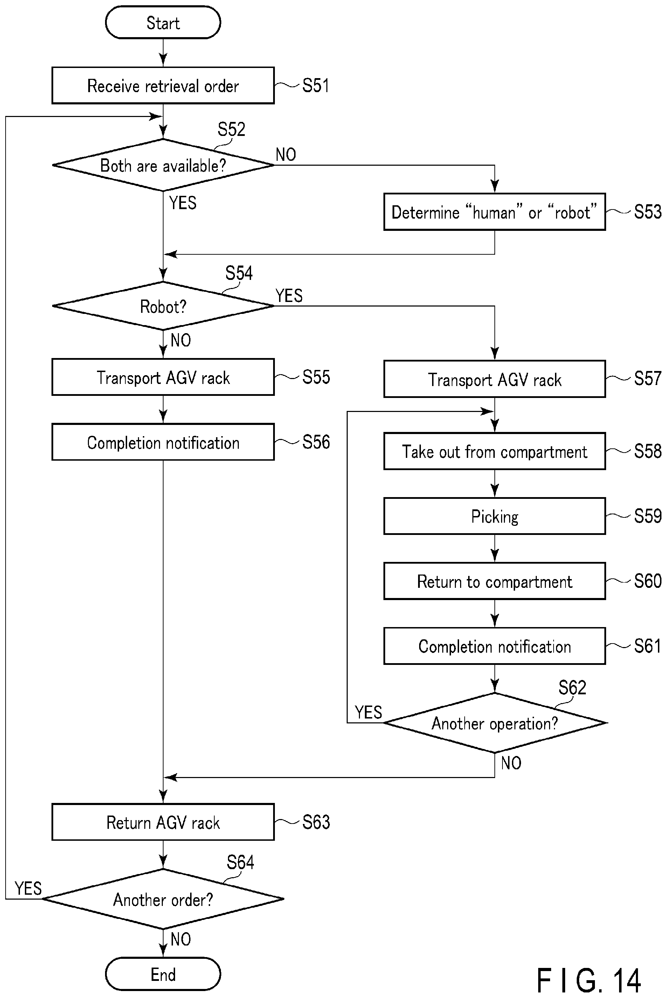

FIG. 14 is a flowchart illustrating an operation example of the AGV control device 30.

First, the processor 31 of the AGV control device 30 receives a retrieval order from the WES 10 via the communication unit 35 (S51). Upon receipt of the retrieval order, the processor 31 determines whether the operation information of the retrieval order indicates "both are available" (S52).

Upon determining that the operation information indicates "both are available" (S52, YES), the processor 31 updates the operation information to "human" or "robot" (S53) .

Upon determining that the operation information does not indicate "both are available" (S52, NO), or upon updating the operation information to "human" or "robot" (S53), the processor 31 determines whether the operation information indicates "robot" (S54).

Upon determining that the operation information does not indicate "robot" (the operation information indicates "human") (S54, NO), the processor 31 transports the AGV rack to the human picking station P using the rack transport AGV 7 (S55).

Herein, it is assumed that the staff person of the human picking station P picks an article from the AGV rack.

Upon completion of the picking, the processor 31 transmits a completion notification indicating that the retrieval operation is completed to the WES 10 through the communication unit 15 (S56).

Upon determining that the operation information is "robot" (S54, YES), the processor 31 transports the AGV rack to the robot picking station P using the rack transport AGV 7 (S57). Upon transporting the AGV rack to the robot picking station P, the processor 31 takes out the case from the compartment of the AGV rack using the takeout device 82 (S58).

Upon taking out the case, the processor 31 picks the article from the case using the picking robot 81 (S59). Upon picking the article, the processor 31 returns the case to the compartment using the takeout device 82 (S60).

Upon returning the case to the compartment, the processor 31 transmits a completion notification indicating that the retrieval operation is completed to the WES 10 through the communication unit 15 (S61). Upon transmitting the completion notification to the WES 10, the processor 31 determines whether or not the picking is performed from another compartment of the AGV rack (S62).

Upon determining that the picking is performed from another compartment of the AGV rack (S62, YES), the processor 31 returns to S58.

If transmitting the completion notification indicating that the retrieval operation is completed to the WES 10 (S56), or if determining that the picking is not performed from another compartment of the AGV rack (S62, NO), the processor 31 returns the AGV rack to the original position using the rack transport AGV 7 (S63).

Upon returning the AGV rack to the original position, the processor 31 determines whether there is another retrieval order (S64). Upon determining that there is another retrieval order (S64, YES), the processor 31 returns to S52.

Upon determining that there is not another retrieval order (S64, NO), the processor 31 ends the operation.

The picking system 100 may perform the storing operation in the same manner.

The processor 11 of the WES 10 does not necessarily have to generate the operation information indicating "both are available".

The picking system configured as described above designates a worker to process an article based on the characteristic or the owner of the article. Therefore, the picking system can have the article picked by an appropriate worker. Thus, the picking system can effectively process the article.

### (Fifth Embodiment)

Next, the fifth embodiment will be described.

The picking system 100 according to the fifth embodiment is different from that according to the first embodiment in that the AGV racks 201 to 230 are grouped depending on whether an article (human article) picked (or stored) by a human or an article (robot article) picked (or stored) by the picking robot 81 is stored. Therefore, the same reference numerals are given to the other points, and the detailed description thereof will be omitted.

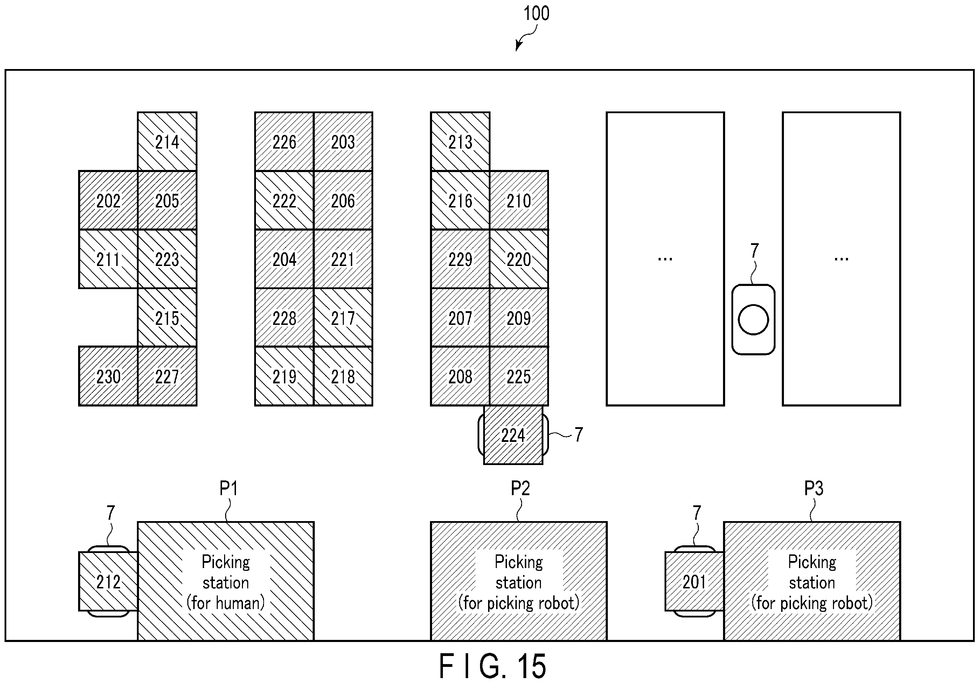

FIG. 15 shows a configuration example of the picking system 100. In the example shown in FIG. 15, the AGV racks 201 to 220 store human articles. That is, the AGV racks 201 to 220 are grouped as AGV racks for storing human articles. The AGV racks 221 to 230 store robot articles. That is, the AGV racks 221 to 230 are grouped as AGV racks for storing the robot articles.

The NVM 34 of the AGV control device 30 stores attribute information indicating to which group each AGV rack belongs. For example, the attribute information stores AGV rack information for identifying an AGV rack and a flag indicating a group of human articles or a group of robot articles in association with each other.

The processor 11 of the WES 10 transmits the storage order or the retrieval order to which the operation information is added to the AGV control device 30 through the communication unit 15. The processor 11 may transmit the storage order or the retrieval order to which the owner information and the operation information are added to the AGV control device 30.

The processor 31 of the AGV control device 30 transports the AGV rack to the picking station P based on the operation information of the storage order or the retrieval order. Upon transporting the AGV rack to the picking station P, the processor 31 performs the storing operation or the retrieval operation as in the first embodiment.

The picking system configured as described above divides the AGV racks into a group for storing human articles and a group for storing robot articles. Therefore, the picking system can effectively sort the articles to the AGV rack according to the worker. In addition, the picking system can limit the range of AGV racks to be modified to accommodate the takeout device or picking robot by grouping AGV racks for storing robot articles.

### (Sixth Embodiment)

Next, the sixth embodiment will be described.

The picking system 100 according to the sixth embodiment is different from that according to the fifth embodiment in that the compartments of the AGV racks are grouped. Therefore, the same reference numerals are given to the other points, and the detailed description thereof will be omitted.

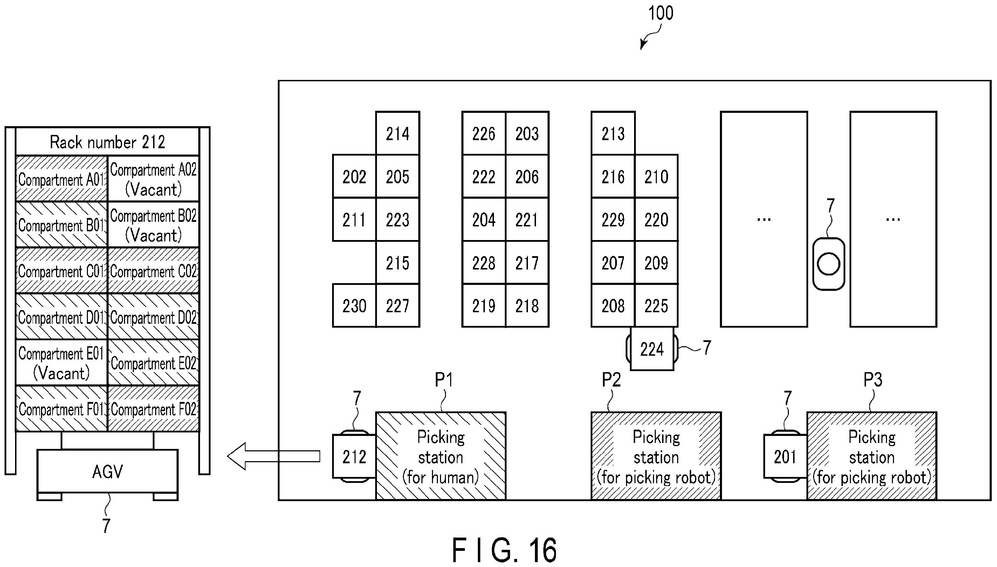

FIG. 16 is a diagram illustrating a configuration example of the picking system 100. With FIG. 16, the group of the compartments will be described using the AGV rack 212 as an example.

As shown in FIG. 16, the AGV rack 212 includes six rack tiers. The AGV rack 212 includes two compartments on each rack tier. That is, the AGV rack 212 is provided with a compartment A01, a compartment A02, a compartment B01, a compartment B02, a compartment C01, a compartment C02, a compartment D01, a compartment D02, a compartment E01, a compartment E02, a compartment F01, and a compartment F02.

Herein, the compartment A01, the compartment C01, the compartment C02, and the compartment F02 belong to a group of compartments for storing robot articles. The compartment B01, the compartment D1, the compartment D02, the compartment E02, and the compartment F01 belong to a group of compartments for storing human articles. The compartment A02, the compartment B02, and the compartment E01 do not belong to any group.

The NVM 34 of the AGV control device 30 stores attribute information indicating to which group each compartment belongs. For example, the attribute information stores compartment information (for example, a compartment ID) for identifying a compartment and a flag indicating a group of human articles or a group of robot articles in association with each other.

The NVM 34 may store information indicating the compartment of each AGV rack.

The processor 11 of the WES 10 transmits the storage order or the retrieval order to which the operation information is added to the AGV control device 30 through the communication unit 15. The processor 11 may transmit the storage order or the retrieval order to which the owner information and the operation information are added to the AGV control device 30.

The processor 31 of the AGV control device 30 transports an AGV rack having a compartment for storing an article to be picked or a compartment for storing an article to the picking station P based on the operation information of the storage order or the retrieval order. Upon transporting the AGV rack to the picking station P, the processor 31 performs the storing operation or the retrieval operation as in the third embodiment.

The picking system configured as described above groups the compartments of the AGV racks. Therefore, the picking system can effectively utilize vacant compartments rather than grouping the AGV racks.

In addition, the picking system can limit the range of the compartments to be modified to accommodate the takeout device or the picking robot by grouping the compartments for storing the robot articles.

### (Seventh Embodiment)

Next, a picking system according to the seventh embodiment will be described.

The picking system according to the seventh embodiment is different from that according to the first embodiment in that a case and a case transport AGV that transports the case are provided. Therefore, the same reference numerals are given to the other points, and the detailed description thereof will be omitted.

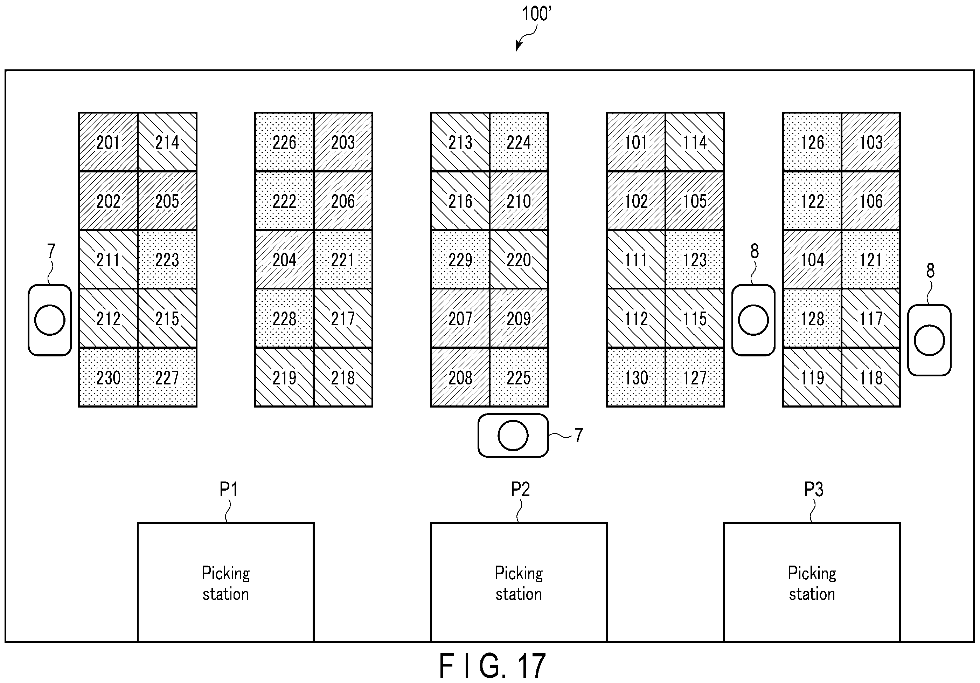

FIG. 17 is a diagram illustrating a configuration example of a picking system 100' according to the seventh embodiment.

As shown in FIG. 17, the picking system 100' includes picking stations P (P1 to P3), a rack transport AGV 7, a case transport AGV 8, AGV racks 201 to 230, and AGV cases 101 to 106, 111, 112, 114, 115, 117 to 119, 121 to 123, 126 to 128, and 130.

The case transport AGV 8 is an automatic transport device that loads and transports AGV cases. For example, the case transport AGV 8 travels toward a designated loading position and acquires an AGV case at the designated loading position. The case transport AGV 8 travels toward a designated unloading position and releases the AGV case at the designated unloading position.

For example, the case transport AGV 8 includes a gripping mechanism for gripping the AGV case and a moving mechanism for moving the case transport AGV itself.

The AGV case stores an article. Herein, the AGV case is not stored in the AGV rack. The AGV case may be the same as or different from the case stored in the compartment of the AGV rack.

The AGV cases (storage mechanism) are divided into a plurality of groups. Herein, the AGV cases are grouped for each owner of stored articles. The AGV cases 101 to 106 belong to a group of AGV cases that store articles of the owner A. The AGV cases 111, 112, 114, 115, and 117 to 119 belong to a group of AGV cases that store articles of the owner B. The AGV cases 121 to 123, 126 to 128, and 130 belong to a group of AGV cases that store articles of the owner C.

The AGV cases of each group may be arranged together or may be arranged separately.

Next, a control system of the picking system 100 will be described.

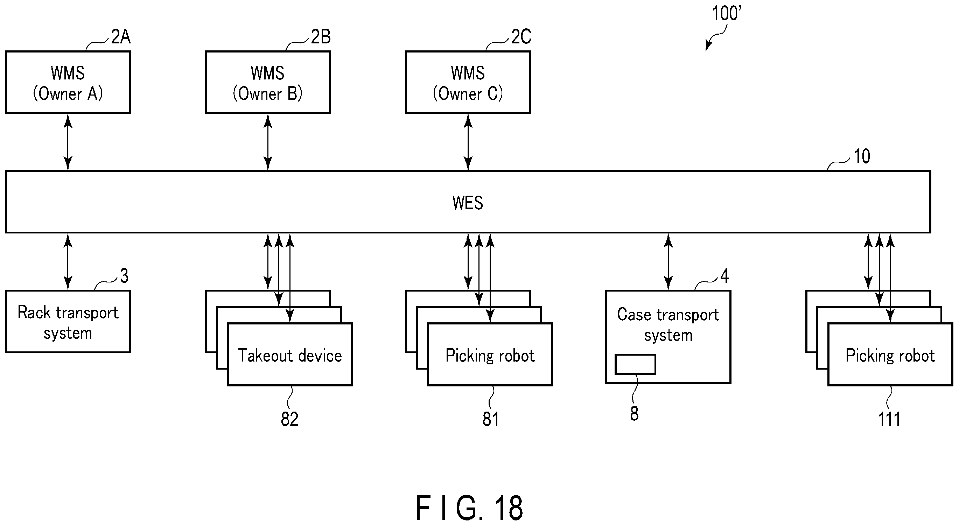

FIG. 18 is a block diagram showing a configuration example of a control system of the picking system 100' according to the embodiment.

As shown in FIG. 18, the picking system 100 includes a WMS 2, a rack transport system 3, a case transport system 4, a WES 10, a picking robot 81, a takeout device 82, and the like.

The case transport system 4 (automated transport system) includes the case transport AGV 8. The case transport system 4 controls the case transport AGV 8 under the control of the WES 10 or the like.

The case transport system 4 stores attribute information indicating to which group each AGV case belongs. The attribute information stores AGV case information (e.g., an AGV case ID) for identifying the AGV case and owner information (for example, an owner ID) for specifying the owner in association with each other.

When storing an article in an AGV case or when picking an article from an AGV case, the picking system 100' transports the AGV case to the picking station P using the case transport AGV 8. Upon completion of storage or picking, as in the first embodiment, the picking system 100' transports the AGV case from the picking station P to the original position using the case transport AGV 8.

The picking system configured as described above groups the AGV cases for each owner. Upon receiving a storage order or a retrieval order from an owner, the picking system stores an article in an AGV case belonging to a group of the owner or picks an article from the AGV case. Therefore, the picking system can effectively process articles from multiple owners.

The program according to the present embodiment may be transferred in a state of being stored in an electronic device or in a state of not being stored in an electronic device. In the latter case, the program may be transferred through a network or may be transferred in a state of being stored in a storage medium. The storage medium is a non-transitory tangible medium. The storage medium is a computer-readable medium. The storage medium may be of any type, such as a CD-ROM or a memory card, as long as it can store programs and can be read by the computer.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. These embodiments and modifications thereof are included in the scope and spirit of the invention and are included in the invention described in the claims and the scope of equivalents thereof.

## Claims

1. An information processing apparatus comprising:
an interface connected to at least one warehouse system corresponding to each owner and to at least one automated transport system transporting a storage mechanism storing an article; and
a processor configured to:
receive, from the warehouse system through the interface, a storage order for storing an article or a retrieval order for retrieving an article;
specify an owner of the storage order or the retrieval order; and
cause the automated transport system to transport the storage mechanism to a station at which an article is picked or stored through the interface based on owner information as information of the specified owner and the storage order or the retrieval order.

2. The information processing apparatus according to claim 1,
wherein the processor is configured to transmit the storage order or the retrieval order to which the owner information is added to the automated transport system through the interface.

3. The information processing apparatus according to claim 1 or 2,
wherein the processor is configured to:
generate operation information indicating a human or a picking robot as a worker that processes an article of the storage order or the retrieval order; and
transmit the storage order or the retrieval order to which the operation information is added to the automated transport system through the interface.

4. The information processing apparatus according to claim 3,
wherein the processor is configured to generate the operation information based on a characteristic of the article.

5. The information processing apparatus according to claim 4,
wherein the characteristic of the article includes any of a size, a shape, a weight, or a packaging of the article.

6. The information processing apparatus according to claim 3,
wherein the processor is configured to generate the operation information based on the owner information.

7. The information processing apparatus according to any one of claims 1 to 6,
wherein the processor is configured to generate a report on the article for each owner.

8. The information processing apparatus according to claim 7,
wherein the report includes any of article identification information for identifying an article stored in the storage mechanism, a quantity, a storage history, or a retrieval history.

9. An information processing method executed by a processor, the method comprising:
receiving a storage order for storing an article or a retrieval order for retrieving an article from a warehouse system corresponding to an owner;
specifying an owner of the storage order or the retrieval order; and
causing an automated transport system transporting a storage mechanism storing an article to transport the storage mechanism to a station at which an article is picked or stored based on owner information as information of the specified owner and the storage order or the retrieval order.

10. A program executed by a processor, the program causing the processor to execute:
a function of receiving a storage order for storing an article or a retrieval order for retrieving an article from a warehouse system corresponding to an owner;
a function of specifying an owner of the storage order or the retrieval order; and
a function of causing an automated transport system transporting a storage mechanism storing an article to transport the storage mechanism to a station at which an article is picked or stored based on owner information as information of the specified owner and the storage order or the retrieval order.

11. A system comprising an information processing apparatus, a control device, and an automated transport device,
the information processing apparatus comprising:
a first interface connected to at least one warehouse system corresponding to each owner and to the control device; and
a first processor configured to:
receive, from the warehouse system through the first interface, a storage order for storing an article or a retrieval order for retrieving an article;
specify an owner of the storage order or the retrieval order; and
cause the control device to transport a storage mechanism storing an article to a station at which an article is picked or stored through the first interface based on owner information as information of the specified owner and the storage order or the retrieval order,
the control device comprising:
a second interface connected to the information processing apparatus;
a third interface connected to the automated transport device; and
a second processor configured to perform control to transport the storage mechanism to the station using the automated transport device through the third interface under the control of the information processing apparatus through the second interface.

12. The system according to claim 11,
wherein the first processor is configured to transmit the storage order or the retrieval order to which the owner information is added to the control device through the first interface, and
the control device includes a memory configured to store attribute information indicating an owner corresponding to the storage mechanism,
the second processor is configured to:
specify the storage mechanism corresponding to owner information of the storage order or the retrieval order by referring to the attribute information; and
perform control to transport the specified storage mechanism to the station using the automated transport device through the third interface.

13. The system according to claim 11 or 12,
wherein the first processor is configured to:
generate operation information indicating a human or a picking robot as a worker that processes an article of the storage order or the retrieval order; and
transmit the storage order or the retrieval order to which the operation information is added to the control device through the first interface,
the second processor is configured to:
specify the station based on the operation information of the storage order or the retrieval order; and
perform control to transport the storage mechanism to the specified station using the automated transport device through the third interface.

14. A non-transitory computer-readable storage medium storing a program for causing a computer to execute:
receiving a storage order for storing an article or a retrieval order for retrieving an article from a warehouse system corresponding to an owner;
specifying an owner of the storage order or the retrieval order; and
causing an automated transport system transporting a storage mechanism storing an article to transport the storage mechanism to a station at which an article is picked or stored based on owner information as information of the specified owner and the storage order or the retrieval order.
